# EUROPEAN PATENT APPLICATION

(11) **EP 4 336 496 A1**
(43) Date of publication of application: **13.03.2024**
(21) Application number: 22194632.0
(22) Date of filing: 08.09.2022
(51) Int. Cl.: G10L 19/018

(54) **DIGITAL DATA EMBEDDING AND EXTRACTION IN MUSIC AND OTHER AUDIO SIGNALS**

(71) Applicant: Utopia Music AG, 6300 Zug (CH)
(72) Inventor: WAHLGREN, Linus, 6300 Zug (CH)
(74) Representative: MERH-IP Matias Erny Reichl Hoffmann Patentanwälte PartG mbB

(57) **Abstract**

The disclosure relates to a method of embedding binary data into an analog signal. For each of a plurality of time slots, one of a first and second binary state is embedded into the analog signal using a pair of frequencies comprised in a frequency spectrum of the analog signal. For a given time slot, if the first binary state is to be embedded into the analog signal, it is ensured that an amplitude of the first frequency is greater than an amplitude of the second frequency. And if the second binary state is to be embedded into the analog signal, it is ensured that the amplitude of the second frequency is greater than the amplitude of the first frequency. The disclosure further relates to a method of reconstructing binary data that is embedded into an analog signal, and to corresponding apparatus, computer programs, and computer-readable storage media.

## Description

### Technical Field

The present disclosure relates to techniques for embedding binary data into analog signals, and to techniques for digital watermarking of audio files. The disclosure further relates to techniques for reconstructing binary data that is embedded into analog signals, including techniques for integrity checking and error correction.

### Background

There are many cases where embedding digital data, e.g., binary data, into analog signals is useful. The analog signals may be audio signals, for example. One example of embedding digital data is commonly referred to as digital watermarking. For audio, identifiers and other metadata can be embedded and extracted with minimal impact on perceived audio. This enables content creators to trace the origin of audio being played and for content services to easily identify the content, its license, and other useful information. If done correctly, the embedded signals survives most compression, all without any severe degradation of the listening experience.

In view of the above, there is a need for reliable techniques of embedding digital data into analog signals, including audio signals, and for corresponding techniques of reconstructing embedded binary data.

### Summary

In view of this need, the present disclosure provides methods of embedding binary data into analog signals and methods of reconstructing binary data that is embedded into analog signals, as well as corresponding apparatus, computer programs, and computer-readable storage media, having the features of the respective independent claims.

One aspect relates to a method of embedding binary data, e.g., digital data, into an analog signal. The binary data may relate to or represent a binary data signal, for example. The analog signal may be an audio signal, such as a music file, for example. According to the method, for each of a plurality of time slots, one of a first binary state and a second binary state may be embedded into the analog signal using a pair of frequencies, or frequency pair. The pair of frequencies may include first and second frequencies of a frequency spectrum of the analog signal. The first and second frequencies may be different from each other. For example, the first and second frequencies may be chosen to be sufficiently different, to not be cut off by relevant compression codecs, and/or to have little impact, e.g., perceptual impact, on the analog signal. It is also understood that the first and second binary states may relate to binary "1" and binary "0", respectively. However, depending on the implementation, also the reverse assignment of binary "1" and "0" to the first and second binary states may be chosen. The time slots may be consecutive time slots in a sequence of time slots, for example.

The method may include, for a given time slot, if the first binary state is to be embedded into the analog signal, for the given time slot, ensuring that in the given time slot an amplitude of the first frequency is greater than an amplitude of the second frequency. On the other hand, if the second binary state is to be embedded into the analog signal, for the given time slot, the method may include ensuring that in the given time slot the amplitude of the second frequency is greater than the amplitude of the first frequency.

Thereby, the proposed method provides for a reliable and efficient way of embedding binary data into an analog signal. Notably, the embedding is independent of the absolute amplitude level of the analog signal, and may accommodate for time-varying absolute amplitudes. Accordingly, the proposed method is particularly applicable to embedding binary data, such as watermarks, for example, into audio signals, e.g., music files.

In some embodiments, the method may further include, for the given time slot, comparing the amplitude of the first frequency to the amplitude of the second frequency. Then, ensuring that the amplitude of the first frequency is greater than the amplitude of the second frequency may involve modifying the analog signal to enhance the amplitude of the first frequency relative to the amplitude of the second frequency if the amplitude of the first frequency is not greater than the amplitude of the second frequency. On the other hand, ensuring that the amplitude of the second frequency is greater than the amplitude of the first frequency may involve modifying the analog signal to enhance the amplitude of the second frequency relative to the amplitude of the first frequency if the amplitude of the second frequency is not greater than the amplitude of the first frequency.

Accordingly, the analog signal may only have to be modified if the amplitudes of the first and second frequencies do not already have the appropriate relationship of magnitudes for embedding the desired data bit for the given time slot.

In some embodiments, modifying the analog signal may involve injecting a predefined signal into the first frequency for enhancing the amplitude of the first frequency, or injecting a predefined signal into the second frequency for enhancing the amplitude of the second frequency. The predetermined signal may be a continuous and/or smooth signal. For example, the predefined signal may be a sinusoidal signal or derived from a sinusoidal signal.

Thereby, the analog signal can be modified in a manner that has very little perceptible impact on the audio signal. This is particularly the case for audio signals.

In some embodiments, the method may further include embedding second binary data into the analog signal using a second pair of frequencies. Therein, the second binary data may be configured to indicate temporal boundaries of payloads, e.g., messages, of the binary data. Accordingly, a binary signal representing or relating to the second binary data may be seen as a clock signal for a binary data signal representing the binary data.

Thereby, boundaries of the payloads of the embedded binary data, i.e., first binary data, can be efficiently indicated. Predefined codewords indicating respective start points and end points of these payloads, and detection of such codewords, thus are not necessary. This allows to improve efficiency and reliability of the data embedding.

In some embodiments, for a given payload of the binary data, the second binary data may include a fixed one of the first and second binary states for all time slots in which the given payload is embedded, and may transition to or from the other one of the first and second binary states at the temporal boundaries of the given payload. Since a transition from a longer sequence of, for example binary "1"s to a longer sequence of binary "0"s is easily detectable, this allows for a very reliable indication of payload boundaries for the embedded binary data.

In some embodiments, the method may further include determining a checksum value for a data word of the binary data and appending the determined checksum value to the data word, for embedding into the analog signal. The checksum value may be a CRC value, for example. Thereby, reliability of data reconstruction can be improved.

In some embodiments, the binary data may be redundantly embedded into the analog signal using a plurality of different pairs of frequency. Thereby, reliability of data reconstruction can be further improved.

Another aspect of the disclosure relates to a method of reconstructing binary data that is embedded into an analog signal. According to the method, for each of a plurality of time slots, one of a first binary state and a second binary state may be embedded into the analog signal using a pair of frequencies. The pair of frequencies may include first and second frequencies of a frequency spectrum of the analog signal. The durations and/or boundaries of the time slots may be previously agreed on between an embedding instance and a reconstructing instance. Alternatively, the boundaries of the time slots may be determined by analyzing the audio signal at the first and second frequencies. This may involve determining whether a predetermined pattern is present in the audio signal at the first and second frequencies. For example, this may involve determining whether a predetermined pattern is present in the frequency spectrum of the audio signal at the first and second frequencies.

For a given time slot, the method may include comparing an amplitude of the first frequency to an amplitude of the second frequency. Further, if the amplitude of the first frequency is greater than the amplitude of the second frequency, it may be determined that the binary data or binary signal comprises the first binary state as a data bit in the given time slot. On the other hand, if the amplitude of the second frequency is greater than the amplitude of the first frequency, it may be determined that the binary data or binary signal comprises the second binary state as the data bit in the given time slot.

In some embodiments, the method may further include reconstructing second binary data that is embedded into the analog signal using a second pair of frequencies. The method may further include determining temporal boundaries of a payload of the binary data based on the reconstructed second binary data. Here, reconstruction of the second binary data may proceed in analogy to the reconstruction of the binary data, referring to the second pair of frequencies.

In some embodiments, the method may further include dividing a payload of the binary data into a data word and a checksum value for the data word. The method may further include determining whether the checksum value indicates that the payload has been correctly reconstructed. If the checksum value indicates that the payload has not been correctly reconstructed, the method may yet further include the following. For each data bit of the payload, a confidence score relating to a confidence that the respective data bit has been correctly reconstructed is obtained. Then, one or more of the data bits of the payload for which the confidence scores indicate the lowest confidences that the data bits have been correctly reconstructed are flipped to obtain a bit-flipped payload. Finally, it is determined whether the checksum value of the bit-flipped payload indicates that the bit-flipped payload has been correctly reconstructed. Therein, the confidence scores or confidences may be determined based on magnitudes, or absolute values, of differences between the amplitude of the first frequency and the amplitude of the second frequency for the data bits. Flipping the one or more of the data bits of the payload may involve flipping the data bit with the lowest confidence, flipping the data bit with the second to lowest confidence, and/or flipping the two data bits with the lowest confidences.

In some embodiments, the binary data may be redundantly embedded into the analog signal using a plurality of different pairs of frequency. Then, the method may further include reconstructing respective redundant versions of the binary data for the plurality of different pairs of frequency. In this case, the most reliable version of the reconstructed binary data may be used as the final reconstructed version. The most reliable version may be that version with the greatest magnitudes, or absolute values, of differences between the amplitudes of the frequencies of the respective pair of frequencies. Alternatively, the reconstructed versions of the binary data may be correlated with each other to determine the final reconstructed version. Reconstructing the respective redundant versions of the binary data may proceed in analogy to the method(s) described above.

Another aspect of the disclosure relates to a method of watermarking an audio file. The method may include embedding binary data corresponding to a digital watermark into the audio file using the method according to the aforementioned first aspect or any of its embodiments.

According to another aspect of the disclosure, an apparatus is described. The apparatus may include a processor and a memory that is coupled to the processor and stores instructions for the processor. The processor may be configured to perform all steps of the methods according to preceding aspects and their embodiments.

According to a further aspect, a computer program is described. The computer program may comprise executable instructions for performing the methods or method steps outlined throughout the present disclosure when executed by a computing device, e.g., processor.

According to another aspect, a computer-readable storage medium is described. The storage medium may store a computer program, e.g., the computer program of the preceding aspect, adapted for execution on a processor and for performing the methods or method steps outlined throughout the present disclosure when carried out on the processor.

It should be noted that the methods and apparatus including their preferred embodiments as outlined in the present disclosure may be used stand-alone or in combination with the other methods and systems disclosed in this document. Furthermore, all aspects of the methods and apparatus outlined in the present disclosure may be arbitrarily combined. In particular, the features of the claims may be combined with one another in an arbitrary manner.

It will be appreciated that apparatus features and method steps may be interchanged in many ways. In particular, the details of the disclosed method(s) can be realized by the corresponding apparatus, and vice versa, as the skilled person will appreciate. Moreover, any of the above statements made with respect to the method(s), and, e.g., their steps, are understood to likewise apply to the corresponding apparatus, and, e.g., their blocks, stages, units, and vice versa.

### Brief Description of Drawings

The invention is explained below in an exemplary manner with reference to the accompanying drawings, wherein
**Fig. 1** is a flowchart illustrating an example of a method of embedding binary data into an analog signal according to embodiments of the disclosure;
**Fig. 2** is a diagram illustrating an example of spectrogram of an analog signal into which binary data has been embedded according to embodiments of the disclosure;
**Fig. 3** is a diagram illustrating an example of spectrogram of an analog signal into which binary data has been embedded together with a clock signal, according to embodiments of the disclosure;
**Fig. 4** is a flowchart illustrating an example of a method of reconstructing binary data that has been embedded into an analog signal according to embodiments of the disclosure;
**Fig. 5** is a flowchart illustrating an example of a method of integrity checking and error correction that may be employed in the context of the method of **Fig. 4**, according to embodiments of the disclosure; and
**Fig. 6** is a diagram illustrating another example of a spectrogram of an audio signal into which binary data has been embedded, additionally showing confidence scores for reconstructed data bits, according to embodiments of the disclosure.

### Detailed Description

In the following, example embodiments of the disclosure will be described with reference to the appended figures. Identical elements in the figures may be indicated by identical reference numbers, and repeated description thereof may be omitted.

### Embedding Binary Data or Binary Signals

One problem faced when embedding binary data into audio signals, as non-limiting examples of analog signals, is that audio amplitude varies over time and the amplitude is a relative scale, so that it is not possible to simply pick a frequency and send high and low aptitudes to represent the binary data.

Accordingly, the present disclosure suggests to pick a pair of frequencies, or frequency pair, and to ensure that the first frequency of the pair has a higher amplitude than the second frequency of the pair when representing a binary "0" and the opposite when representing a binary "1" in the binary data. This ensures that the binary value can be easily determined while modifying the audible signal as little as possible. Here, it is understood that the assignment, i.e., initial assignment, of high and low amplitudes to binary "0" and "1" may be arbitrary and that also the opposite assignment may be chosen, depending on the implementation. It is further understood that the respective chosen assignment needs to be agreed upon or otherwise shared between an encoder, or embedding instance, that embeds the binary data and a decoder, or reconstructing instance, that reconstructs the embedded binary data.

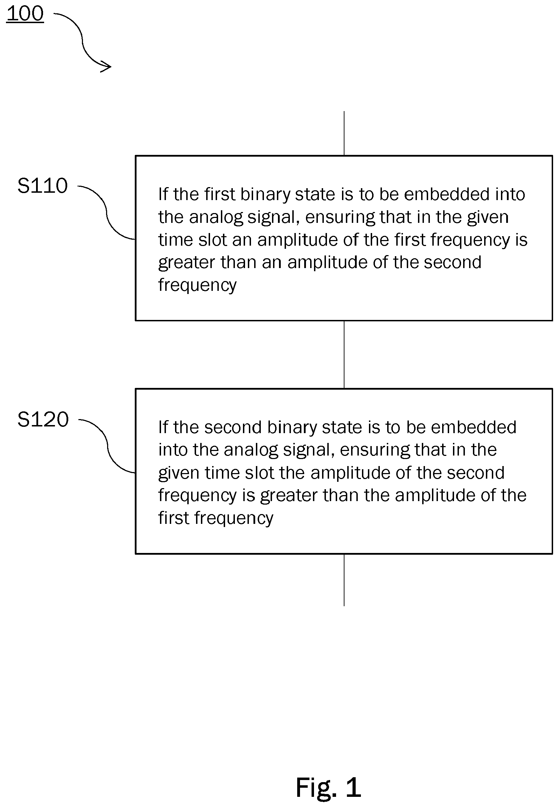

**Fig. 1** is a flowchart illustrating an example of a method 100 of embedding binary data, e.g., digital data, into an analog signal according to embodiments of the disclosure. This method may relate to or may be used in the context of digital watermarking. The analog signal into which the binary data is embedded may be an audio signal, for example. In particular, the analog signal may be comprised by, included in, or relate to a music file. Nevertheless, the present disclosure shall not be understood to be limited to audio signals and may be applied to any analog signal.

The binary data may be referred to as a binary payload. It may relate to or represent a binary data signal, for example. In other words, the binary data may relate to or represent the information content, e.g., the binary states, of a time-dependent binary signal. Further, the binary data may relate to metadata, digital watermarks, or additional information on the analog data, etc..

In general, the method 100 embeds, for each of a plurality of time slots, one of a first binary state and a second binary state into the analog signal using a pair of frequencies. This pair of frequencies comprises a first frequency and a second frequency, with the first and second frequencies being frequencies of a frequency spectrum of the analog signal and being different from each other.

It is understood that the first and second frequencies are chosen sufficiently different from each other, to enable reliable reconstruction of the embedded binary data. Further, the first and second frequencies may be chosen to not be cut off by applicable compression codecs and/or to have little impact, e.g., perceptual impact, on the analog signal. As one non-limiting example for the first and second frequencies, 14kHz and 16kHz may be chosen.

The time slots may be consecutive time slots in a sequence of time slots, for example. They may have predefined duration, for example equal duration. Further, durations of the time slots may be agreed upon between the embedding instance and the reconstructing instance.

It is understood in the context at hand that the amplitudes of the first and second frequencies being different may mean that these amplitudes are sufficiently different to allow reliable reconstruction of the embedded data. In other words, the ensured difference of amplitudes may be chosen to translate into a sufficiently good signal-to-noise ratio (SNR) for the embedded data. Without intended limitation, the minimum difference of amplitudes that the method 100 seeks to ensure may be 44dB, for example.

The method 100 comprises steps S110 and S120 that may be performed for a given time slot among the plurality of time slots. Depending on the implementation, steps S110 and S120 may be performed for each of the plurality of time slots.

At step S110, if the first binary state is to be embedded into the analog signal, it is ensured that an amplitude of the first frequency in the given time slot is greater than an amplitude of the second frequency. Here and in the following, the amplitude of the first frequency is intended to refer to the magnitude of the analog signal in a time-frequency tile in a time-frequency domain, e.g., after appropriate time-frequency transform of the analog signal, corresponding to the given time slot and the first frequency. Likewise, the amplitude of the second frequency is intended to refer to the magnitude of the analog signal in a time-frequency tile in the time-frequency domain corresponding to the given time slot and the second frequency.

At step S120, if the second binary state is to be embedded into the analog signal, it is ensured that the amplitude of the second frequency in the given time slot is greater than the amplitude of the first frequency.

Notably, only one of steps S110 and S120 may be performed for the given time slot. If the binary data to be embedded requires that the first binary state is to be embedded into the given time slot as the data bit, step S110 may be performed. Conversely, if the binary data to be embedded requires that the second binary state is to be embedded into the given time slot as the data bit, step S120 may be performed. Accordingly, different ones of steps S110 and S120 may be performed for different time slots among the plurality of time slots, depending on the respective data bit that needs to be embedded into respective time slots.

For some time slots, the amplitudes of the first and second frequencies may already have the required relationship for embedding the desired data bit for this time slot. For other time slots, this may not be the case, which then necessitates modification of the analog signal.

Thus, the method 100 may further comprise a step of comparing, for the given time slot, the amplitude of the first frequency to the amplitude of the second frequency.

Then, ensuring that the amplitude of the first frequency is greater than the amplitude of the second frequency at step S110 may involve modifying the analog signal to enhance the amplitude of the first frequency relative to the amplitude of the second frequency if the amplitude of the first frequency is not already greater, or not greater to sufficient degree, than the amplitude of the second frequency. In other words, if the desired data bit for the time slot in question requires that the amplitude of the first frequency is greater than the amplitude of the second frequency, i.e., if it is desired to embed the first binary state into the time slot in question, but the amplitude of the first frequency is not already greater than the amplitude of the second frequency in the original analog signal, the analog signal is modified in such manner as to enhance the amplitude of the first frequency relative to the amplitude of the second frequency. This may involve enhancing the amplitude of the first frequency and/or suppressing the amplitude of the second frequency.

On the other hand, ensuring that the amplitude of the second frequency is greater than the amplitude of the first frequency at step S120 may involve modifying the analog signal to enhance the amplitude of the second frequency relative to the amplitude of the first frequency if the amplitude of the second frequency is not already greater, or not greater to sufficient degree, than the amplitude of the first frequency. In other words, if the desired data bit for the time slot in question requires that the amplitude of the second frequency is greater than the amplitude of the first frequency, i.e., if it is desired to embed the second binary state into the time slot in question, but the amplitude of the second frequency is not already greater than the amplitude of the first frequency in the original analog signal, the analog signal is modified in such manner as to enhance the amplitude of the second frequency relative to the amplitude of the first frequency. This may involve enhancing the amplitude of the second frequency and/or suppressing the amplitude of the first frequency.

In the above, modifying the analog signal to enhance the amplitude of the first frequency relative to the amplitude of the second frequency may involve injecting, e.g., inserting, a predefined signal into the first frequency for enhancing the amplitude of the first frequency. Conversely, modifying the analog signal to enhance the amplitude of the second frequency relative to the amplitude of the first frequency may involve injecting, e.g., inserting, a predefined signal into the second frequency for enhancing the amplitude of the second frequency. To this end, the predefined signal may be a periodic predefined signal of the first frequency or the second frequency, depending on which of the amplitudes of the first and second frequencies needs to be enhanced. Further, the predetermined signal may be a continuous and/or smooth signal. For example, the predefined signal may be a sinusoidal signal. Preferably, the predetermined signal may be injected in such manner that injection does not have an impact at the boundaries of the time slot in question, and has maximum impact at a timing within the time slot, e.g., in the middle of the time slot or substantially in the middle of the time slot. In such case, said impact may continuously increase from the start of the time slot and may continuously decrease towards the end of the time slot. The strength, or peak strength, of the injected signal may be chosen based on the difference of the amplitudes of the first and second frequencies in the given time slot of the original analog signal, to ensure the desired minimum difference between these amplitudes in accordance with the data bit to be embedded for the given time slot.

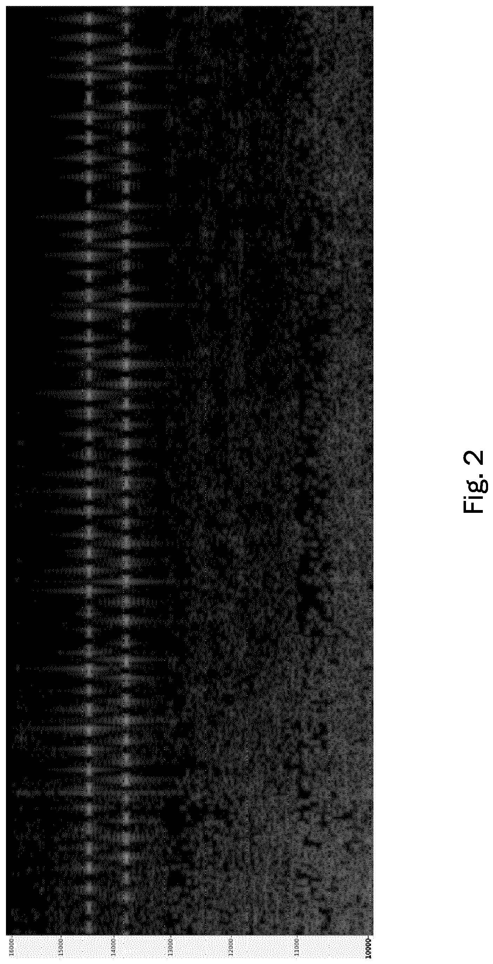

**Fig. 2** shows an example of a spectrogram of an analog signal into which binary data has been embedded according to the above method. Specifically, in this example the binary data, e.g., binary sequence, "101010101010" is embedded repeatedly in the audio signal.

The embedded binary data is clearly visible as alternating dot patterns at about 13.75kHz, as an example of the first frequency, and at about 14.5kHz, as an example of the second frequency, respectively. A bright dot, i.e., high amplitude, at the first frequency in the absence of a dot at the second frequency for a given time slot indicates the first binary state-binary "1" in this example-, whereas a bright dot at the second frequency in the absence of a dot at the first frequency for a given time slot indicates the second binary state-binary "0" in this example. It is understood that each time slot includes one such dot at the first or second frequency. The binary data, or binary sequence, "101010101010" thus requires 12 time slots for embedding.

As a possible addition to the method described above, the issue of determining where a binary payload starts and ends may be treated as described in the following. Without knowing where to start reading it may be difficult to determine what data is being read. One way to address this issue is to select a second pair of frequencies and to use the above technique for embedding binary "1"s and "0"s in this second pair of frequencies, sending/embedding a stream of "1"s from message start to end and then sending/embedding "0"s for the duration of the next payload. This may alternate between sequences of "1"s and sequences of "0"s with every payload. When doing so, the timing of a transition between, for example, a sequence of "1"s to a sequence of "0"s, or vice versa, can be recognized by a decoder that tries to reconstruct the embedded binary data as a boundary between different payloads/messages of the embedded data. The binary data that is embedded using the second pair of frequencies may thus be seen as relating to a clock signal for informing the decoder of the boundaries between payloads/messages.

That said, methods according to embodiments of the disclosure may further comprise embedding second binary data into the analog signal using a second pair of frequencies. In this case, the second binary data may be configured to indicate temporal boundaries between payloads of the binary data. As noted above, a binary signal representing or relating to the second binary data may be seen as a clock signal for a binary data signal representing the binary data. Needless to say, it is understood that the frequencies of the second pair of frequencies are different, or sufficiently different, from the aforementioned first and second frequencies.

Further, in line with the above the second binary data may comprise, for a given payload of the binary data, a fixed one of the first and second binary states for all time slots in which the given payload is embedded, e.g., a continuous sequence of "1"s or a continuous sequence of "0"s. Then, the second binary data may transition to or from the other one of the first and second binary states at the temporal boundaries of the given payload.

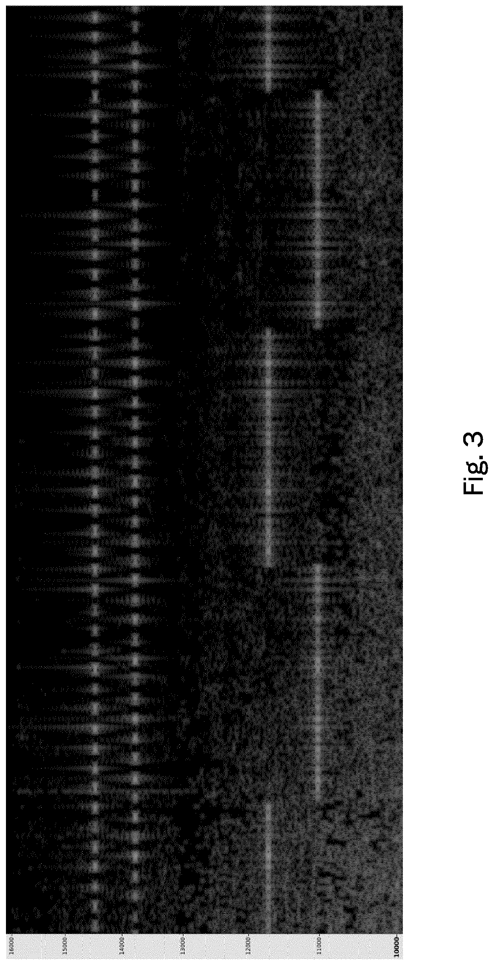

**Fig. 3** shows an example of a spectrogram of an analog signal into which the binary data has been embedded together with the clock signal. In this example the binary data, or binary sequence, "101010101010" is embedded repeatedly in the audio signal in the same manner as in **Fig. 2****.**

The embedded binary data is again clearly visible as alternating dot patterns at about 13.75kHz, as an example of the first frequency, and at about 14.5kHz, as an example of the second frequency, respectively. The binary data, or binary sequence, "101010101010" thus requires 12 time slots for embedding. In addition, the second binary data, i.e., the clock signal, is visible as dot patterns at about 11kHz and at about 11.75kHz. For the duration of the 12 time slots of each payload/message of the binary data, the second binary data comprises a continuous sequence of 12 binary "0"s or 12 binary "1"s, with transitions between continuous sequences attemporal boundaries of payloads/messages of the binary data.

### Verifying Integrity of Binary Data

Since analog signals are inherently lossy, it would be preferable to have some form of integrity check to ensure that the payload is intact. This could be done for example by using a parity bit. To do so, the number of "1"s, or of a chosen one of the first and second binary states, of a message may be counted in the message and if even, a certain parity bit, e.g., "1", may be added, and if odd the opposite bit, e.g., "0", may be added at the end of the message. This added bit can then be used to detect if a single bit is incorrect in the reconstructed message.

An issue occurring for the above technique using a single parity bit is that if two, four, or any even numbers of bits are incorrect, the message would still be perceived as intact. Since the present disclosure relates to lossy signals, it may be preferable to use multiple parity bits so that multiple incorrect bits can be detected.

Several implementations of multi-bit checksums are feasible for use in the context of the present disclosure. One of them is the Hamming Code that can detect single and double bit errors and can even reconstruct the message if only a single bit is incorrect. As an alternative, CRCs or Cyclic Redundancy Codes may be used when focusing on verification of the integrity of signals and detection of burst errors.

Since audio signals often vary in intensity and errors in the data are often packed together, using CRC may be particularly advantageous when embedding binary data in audio signals. While any kind of CRC or data integrity technique may be used in the context of the present disclosure, with varying benefits and cost, a preferred embodiment of the disclosure may use CRC-4 for this purpose.

In view of the above, methods according to embodiments of the disclosure may further comprise determining a checksum value for a data word of the binary data and appending the determined checksum value to the data word, for embedding into the analog signal. Here, as noted above, the checksum may be a CRC value, for example, such as a CRC-4 value. In one example, the actual data word may comprise 20 bits of data, followed by an 8-bit CRC sum, resulting in a total message length of 28 bits.

An alternative or possibly complementary technique for ensuring integrity of the binary data may be to redundantly embed the binary data into the analog signal using a plurality of different, or sufficiently different, pairs of frequency. At reconstruction, different reconstructed versions of the redundantly embedded binary data can then be correlated with each other to determine reconstructed binary data that has the highest likelihood of being correct. This technique may be employed independently of the aforementioned techniques involving checksums. For example, integrity of each redundant version of the binary data may be separately ensured using a respective checksum value.

### Reconstruction of Embedded Binary Data

Methods of reconstructing the embedded binary data may mirror method 100 described above with reference to **Fig. 1****.** Thus, analogous statements as made above may apply here, which may not be explicitly repeated for reasons of conciseness.

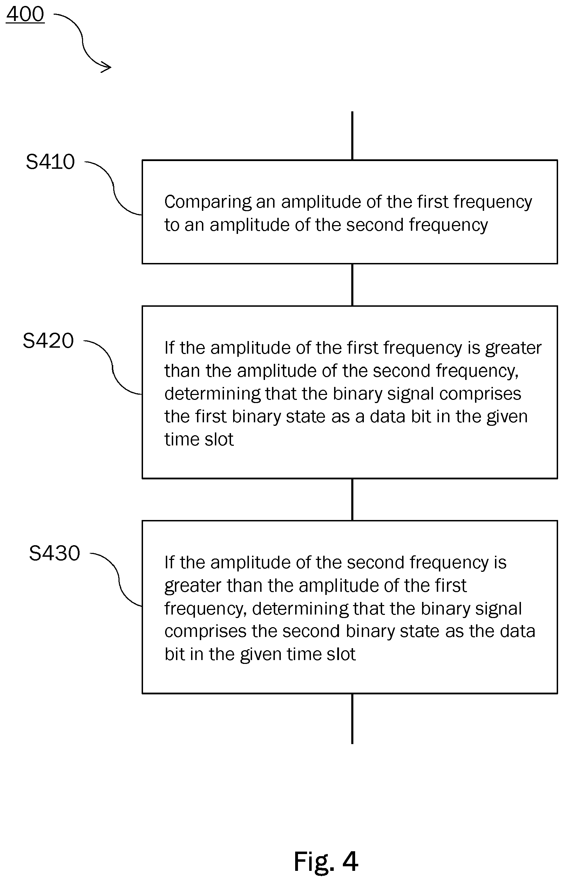

**Fig. 4** is a flowchart illustrating an example of such method 400 of reconstructing binary data that has been embedded into an analog signal according to embodiments of the disclosure. Here, it is assumed that for each of a plurality of time slots, one of a first binary state and a second binary state is embedded into the analog signal using a pair of frequencies, wherein the pair of frequencies comprises first and second frequencies, for example first and second sufficiently different frequencies, of a frequency spectrum of the analog signal, in line with the output produced by method 100 described above. It is understood that the embedding-side, or embedding instance, and the reconstruction-side, or reconstructing instance, are in agreement on which frequencies to use for embedding the binary data, or any second binary data and/or any redundant versions of the binary data.

It is further understood that the durations and/or temporal boundaries of the time slots may be previously agreed on between the embedding-side and the reconstruction-side. Alternatively, the boundaries of the time slots may be determined by analyzing the audio signal at the first and second frequencies. This may involve determining whether a predetermined pattern is present in the audio signal at the first and second frequencies. In particular, this may involve determining whether a predetermined pattern is present in the frequency spectrum of the audio signal at the first and second frequencies. For example, such predetermined pattern may result from injection of a predefined signal at the first or second frequencies, as described above in the context of method 100.

The method 400 comprises steps S410, S420, and S430 that may be performed for a given time slot among the plurality of time slots. Depending on the implementation, steps S410 to S430 may be performed for each of the plurality of time slots. It is understood that a full payload/message may be reconstructed by performing steps S410, S420, and S430 for each of a plurality of consecutive time slots, for determining a sequence of data bits of the binary data.

At step S410, an amplitude of the first frequency is compared to an amplitude of the second frequency.

At steps S420, it is determined that the binary signal or binary data comprises the first binary state as a data bit in the given time slot if the amplitude of the first frequency is greater than the amplitude of the second frequency.

At step S430, it is determined that the binary signal or binary data comprises the second binary state as the data bit in the given time slot if the amplitude of the second frequency is greater than the amplitude of the first frequency.

It is understood that the amplitudes of the first and second frequencies may need to be sufficiently different for allowing reliable reconstruction of the embedded data, as described above in the context of the method 100. However, assuming that the embedding-side has taken appropriate measures to ensure sufficient differences of amplitudes, the reconstruction-side may not need to specifically check whether the greater one of the two amplitudes is sufficiently greater than the smaller one of the two amplitudes.

In a framework in which a clock signal for indicating temporal boundaries of the payloads of the binary data has been embedded into the analog signal, the method 400 may further comprise reconstructing second binary data that is embedded into the analog signal using a second pair of frequencies. Then, the method may determine temporal boundaries of a payload of the binary data based on the reconstructed second binary data. It is understood that reconstruction of the second binary data may proceed in analogy to the reconstruction of the binary data described above with reference to steps S410 to S430, referring however to the second pair of frequencies.

### Treatment of Data Errors

Techniques for detecting data errors for example by means of parity bits and checksums have been described above. Based thereon, the present disclosure further provides means of reconstructing or correcting messages that are found to be erroneous, to avoid that too many messages need to be dropped due to simple single and double bit errors. Notably, the checksums adopted above per se do not provide for techniques for data reconstruction, but only a way to verify whether a message is reconstructed correctly or not.

Since the present disclosure is concerned with analog signals, such as audio signals, for example, it is often the case that the bit that is incorrect has the least amplitude difference between the sampled frequencies of the pair of frequencies. It is therefore proposed to sort the bits of an incorrectly reconstructed message by their amplitude differences. Then, the bit with the smallest amplitude difference may be considered as the least distinct value and consequently, as the bit that is most likely erroneous. Then, it can be tried to verify the checksum after this most likely erroneous bit has been flipped. If this should not lead to a correct checksum, also the next most likely erroneous bit, i.e., the bit with the next-to-smallest amplitude difference between the frequencies of the pair, may be flipped instead.

If after test-flipping the top N bits, i.e., the N most likely erroneous bits, and no working value payload is found, it may be attempted to flip two bits at a time to see if that produces a valid checksum for the payload. In the example above, N is chosen to be N=2, but other values are feasible as well, depending on circumstances.

In general, it is important not to flip more bits than the checksum can compensate for, to avoid false positives. In some cases however it may make more sense to flip two very likely erroneous bits than to flip a very unlikely erroneous single bit. The flipping strategy to be chosen may depend on the size of the payload, the checksum strength, and the acceptable risk of a false positive.

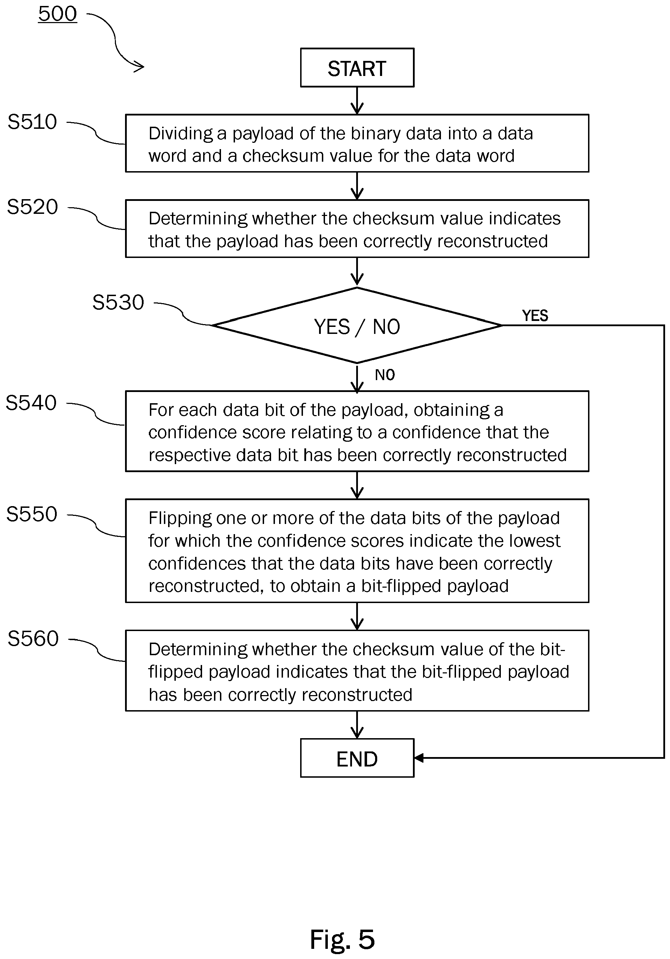

An example of a method 500 for message/payload verification and correction that may be used in the context of method 400 is illustrated in the flowchart of **Fig. 5****.** Method 500 comprises steps S510 to S560 that may be performed after the steps of method 400 have been repeatedly performed for several time slots to yield a reconstructed payload or message of the binary data.

At step S510, a payload of the binary data is divided into a data word and a checksum value for the data word.

At step S520, it is determined whether the checksum value indicates that the payload has been correctly reconstructed.

Then, if the checksum value indicates that the payload has been correctly reconstructed (YES at step S530), the method ends. On the other hand, if the checksum value indicates that the payload has not been correctly reconstructed (NO at step S530), the method proceeds to step S540.

At step S540, a confidence score relating to a confidence that the respective data bit has been correctly reconstructed is obtained for each data bit of the payload. The confidence scores or confidences may be determined based on magnitudes, or absolute values of differences between the amplitude of the first frequency and the amplitude of the second frequency for the data bits, or in general, for amplitudes of the frequencies of the applicable pair of frequencies.

At step S550, one or more of the data bits of the payload for which the confidence scores indicate the lowest confidences that the data bits have been correctly reconstructed are flipped, to obtain a bit-flipped payload.

Flipping the one or more of the data bits of the payload may involve flipping the data bit with the lowest confidence score, flipping the data bit with the second to lowest confidence score, and/or flipping the two data bits with the lowest confidence scores. Further examples of flipping patterns are described below.

At step S560, it is determined whether the checksum value of the bit-flipped payload indicates that the bit-flipped payload has been correctly reconstructed.

If so, the method ends. Otherwise, a different pattern for bit flipping, or flipping pattern, based on the determined confidence scores, may be attempted and steps S550 and S560 may be repeated.

In general, for a predetermined number N, e.g., chosen as described above, different patterns of bit flipping that may be consecutively attempted may involve flipping the data bit with the lowest confidence score; flipping the data bit with the next-to-lowest confidence score; ...; and flipping the data bit with the Nth-to lowest confidence score. These patterns of bit flipping may further include flipping two data bits out of the N data bits with the lowest confidence scores, for example the data bit with the lowest confidence score and another one of the remaining N-1 bits with the lowest confidence scores.

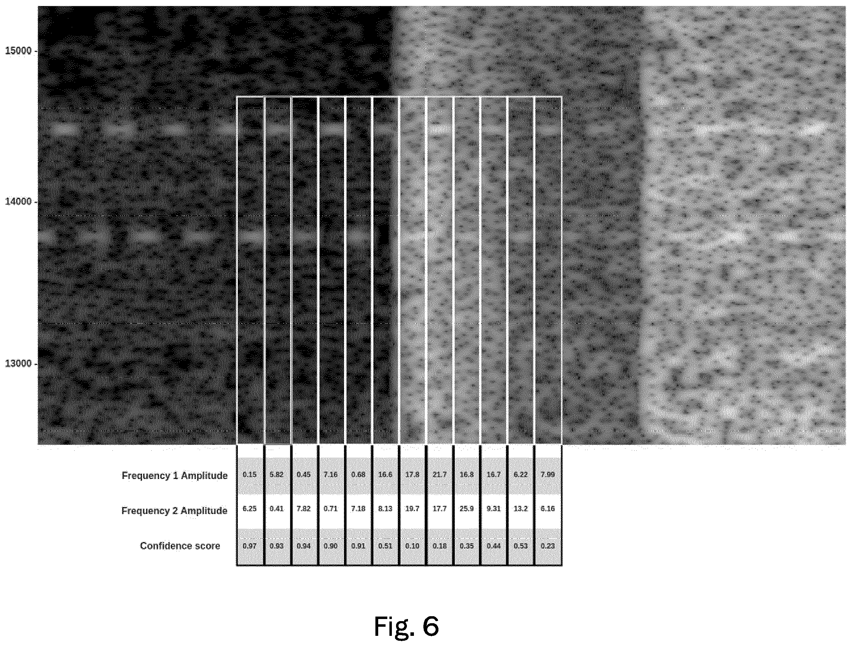

**Fig. 6** shows a spectrogram of an audio signal into which binary data has been embedded, together with confidence scores for the reconstructed data bits. Listed are the amplitudes of the first and second frequencies, together with confidence scores, normalized to 1, that are determined based on the differences between the amplitudes of the first and second frequencies. In particular, the confidence scores may be determined based on the magnitudes or absolute values of the differences between the amplitudes of the first and second frequencies. For example, for the first data bit indicated in the figure, a relatively high confidence score of 0.97 is determined. On the other hand, for the seventh data bit indicated in the figure, a relatively low confidence score of 0.10 is determined, due to noise in the analog signal for the respective time slot.

As noted above, an alternative or possibly complementary technique for ensuring integrity of the binary data may be to redundantly embed the binary data into the analog signal using a plurality of different, or sufficiently different, pairs of frequency. At reconstruction, different reconstructed versions of the redundantly embedded binary data can then be correlated with each other to determine reconstructed binary data that has the highest likelihood of being correct. This technique may be employed independently of the aforementioned techniques involving checksums. For example, integrity of each redundant version of the binary data may be separately ensured using a respective checksum value.

Accordingly, for each of methods 400 and 500, the binary data may have been redundantly embedded into the analog signal using a plurality of different frequency pairs. Then, the respective method may further comprise reconstructing respective redundant versions of the binary data for the plurality of different pairs of frequency. The reconstruction of the redundant versions may proceed using method 400, considering the respective applicable pairs of frequency. Further, reconstruction of each redundant version may involve performing the steps of method 500 for checking and potentially correcting respective payloads/messages.

If redundant versions of the reconstructed binary data are available, this knowledge may be used for validating the reconstructed binary data and deriving final reconstructed binary data. For example, the most reliable version of the reconstructed binary data may be used as the final reconstructed version. The most reliable version may be that version with the greatest magnitudes of differences between the amplitudes at the frequencies of the respective pair of frequencies. Alternatively, the reconstructed versions of the binary data may be correlated with each other to determine the final reconstructed version, for example by majority vote, or the like.

It should be noted that the method features described above correspond to respective apparatus, system, and computer program features that may not be explicitly described, for reasons of conciseness, and vice versa. The disclosure of the present document is considered to extend also to such apparatus, system, and computer program features, and vice versa. For example, such apparatus or system may be adapted, e.g., via an appropriately configured processor, to perform any or each of the steps described above, and such computer program may be adapted to cause a processor to perform any or each of the steps described above. The present disclosure should further be construed to be related to a computer-readable medium storing such computer program.

It should further be noted that the description and drawings merely illustrate the principles of the proposed method and apparatus/system. Those skilled in the art will be able to implement various arrangements that, although not explicitly described orshown herein, embody the principles of the invention and are included within its spirit and scope. Furthermore, all examples and embodiment outlined in the present document are principally intended expressly to be only for explanatory purposes to help the reader in understanding the principles of the proposed method and system. Furthermore, all statements herein providing principles, aspects, and embodiments of the invention, as well as specific examples thereof, are intended to encompass equivalents thereof.

## Claims

1. A method of embedding binary data into an analog signal, wherein for each of a plurality of time slots, one of a first binary state and a second binary state is embedded into the analog signal using a pair of frequencies, the pair of frequencies comprising first and second frequencies of a frequency spectrum of the analog signal,
wherein the method comprises, for a given time slot:
if the first binary state is to be embedded into the analog signal, ensuring that in the given time slot an amplitude of the first frequency is greater than an amplitude of the second frequency; and
if the second binary state is to be embedded into the analog signal, ensuring that in the given time slot the amplitude of the second frequency is greater than the amplitude of the first frequency.

2. The method according to claim 1, further comprising, for the given time slot:
comparing the amplitude of the first frequency to the amplitude of the second frequency;
wherein ensuring that the amplitude of the first frequency is greater than the amplitude of the second frequency involves modifying the analog signal to enhance the amplitude of the first frequency relative to the amplitude of the second frequency if the amplitude of the first frequency is not greater than the amplitude of the second frequency; and/or
wherein ensuring that the amplitude of the second frequency is greater than the amplitude of the first frequency involves modifying the analog signal to enhance the amplitude of the second frequency relative to the amplitude of the first frequency if the amplitude of the second frequency is not greater than the amplitude of the first frequency.

3. The method according to claim 2, wherein modifying the analog signal involves injecting a predefined signal into the first frequency for enhancing the amplitude of the first frequency, or injecting a predefined signal into the second frequency for enhancing the amplitude of the second frequency.

4. The method according to any one of the preceding claims, further comprising:
embedding second binary data into the analog signal using a second pair of frequencies,
wherein the second binary data is configured to indicate temporal boundaries of payloads of the binary data.

5. The method according to claim 4, wherein for a given payload of the binary data, the second binary data comprises a fixed one of the first and second binary states for all time slots in which the given payload is embedded, and transitions to or from the other one of the first and second binary states at the temporal boundaries of the given payload.

6. The method according to any one of the preceding claims, further comprising determining a checksum value for a data word of the binary data and appending the determined checksum value to the data word, for embedding into the analog signal.

7. The method according to any one of the preceding claims, wherein the binary data is redundantly embedded into the analog signal using a plurality of different pairs of frequency.

8. A method of reconstructing binary data that is embedded into an analog signal, wherein for each of a plurality of time slots, one of a first binary state and a second binary state is embedded into the analog signal using a pair of frequencies, the pair of frequencies comprising first and second frequencies of a frequency spectrum of the analog signal,
wherein the method comprises, for a given time slot:
comparing an amplitude of the first frequency to an amplitude of the second frequency;
if the amplitude of the first frequency is greater than the amplitude of the second frequency, determining that the binary signal comprises the first binary state as a data bit in the given time slot; and
if the amplitude of the second frequency is greater than the amplitude of the first frequency, determining that the binary signal comprises the second binary state as the data bit in the given time slot.

9. The method according to claim 8, further comprising
reconstructing second binary data that is embedded into the analog signal using a second pair of frequencies; and
determining temporal boundaries of a payload of the binary data based on the reconstructed second binary data.

10. The method according to claim 8 or 9, further comprising:
dividing a payload of the binary data into a data word and a checksum value for the data word;
determining whether the checksum value indicates that the payload has been correctly reconstructed; and
if the checksum value indicates that the payload has not been correctly reconstructed:
for each data bit of the payload, obtaining a confidence score relating to a confidence that the respective data bit has been correctly reconstructed;
flipping one or more of the data bits of the payload for which the confidence scores indicate the lowest confidences that the data bits have been correctly reconstructed, to obtain a bit-flipped payload; and
determining whether the checksum value of the bit-flipped payload indicates that the bit-flipped payload has been correctly reconstructed.

11. The method according to any one of claims 8 to 10, wherein the binary data is redundantly embedded into the analog signal using a plurality of different pairs of frequency; and
the method further comprises reconstructing respective redundant versions of the binary data for the plurality of different pairs of frequency.

12. A method of watermarking an audio file, the method comprising:
embedding binary data corresponding to a digital watermark into the audio file using the method according to any one of the preceding claims.

13. An apparatus comprising a processor and a memory coupled to the processor, the memory storing instructions for execution by the processor, wherein the processor is adapted to perform the method according to any one of claims 1 to 12.

14. A computer program comprising instructions that when executed by a processor cause the processor to perform the method according to any one of claims 1 to 12.

15. A computer-readable storage medium storing the computer program according to claim 14.
